# EUROPÄISCHE PATENTANMELDUNG

(11) **EP 2 058 379 A1**
(43) Veröffentlichungstag der Anmeldung: **13.05.2009**
(21) Anmeldenummer: 08002379.9
(22) Anmeldetag: 08.02.2008
(51) Int. Cl.: C09K 3/10, B65D 41/04, B65D 43/02

(54) **Verfahren zur Herstellung eines Gefässverschlusses**

(30) Priorität: 09.11.2007 EP 07021782
(71) Anmelder: ACTEGA DS GmbH, 28219 Bremen (DE)
(72) Erfinder: Poel-Asendorf, Christiane, 28844 Weyhe (DE); Schlenck, Georg, Dr., 27793 Wildeshausen (DE); Wittenberg, Rüdiger, Dr., 28215 Bremen (DE)
(74) Vertreter: Maiwald Patentanwalts GmbH

(57) **Zusammenfassung**

Die Erfindung betrifft Verfahren zur Herstellung eines Gefäßverschlusses für Gefäße mit einer durch den Gefäßverschluss zu verschließenden Öffnung mit einem Innendurchmesser von mehr als zwei cm, der ein Dichtungselement auf Polymerbasis umfasst, welches im Gefäßverschluss so angeordnet ist, dass es im Schließzustand dichtend an der Öffnung des Gefäßes anliegt, bei dem ein Polymermaterial durch Erwärmung ausreichend fließfähig gemacht und im Bereich des zu erzeugenden Dichtungselementes auf den Gefäßverschluss aufgetragen sowie gegebenenfalls mechanisch in die gewünschte Form gebracht wird, die es nach Erkalten beibehält.

## Beschreibung

Die Erfindung betrifft ein Verfahren zur Herstellung eines Gefäßverschlusses für Gefäße mit einer durch den Gefäßverschluss zu verschließenden Öffnung mit einem Innendurchmesser von mehr als 2 cm, wobei der Gefäßverschluss ein Dichtungselement auf Polymerbasis umfasst, welches im Gefäßverschluss so angeordnet ist, dass es im Schließzustand dichtend an der Öffnung des Gefäßes anliegt.

Insbesondere betrifft die Erfindung die Herstellung von entsprechenden Nockendrehverschlüssen.

Die Erfindung betrifft weiterhin verfahrensgemäß herstellbare Gefäßverschlüsse und die Verwendung bestimmter Polymercompounds für die Erzeugung der genannten Dichtungselemente.

Während die Industrie für die Dichtungseinlagen von Kronkorken oder Flaschenschraubverschlüssen seit längerem PVC-freie Compounds verwendet, werden für Schraubdeckel, Nockendrehverschlüsse, PT-Kappen und dergleichen, die als Gefäßverschlüsse für Gefäße mit einem größeren Innendurchmesser der Öffnung dienen, nach wie vor PVC-haltige Compounds eingesetzt. Üblicherweise werden solche PVC-haltigen Compounds bei Raumtemperatur in flüssiger Form, aus weichmacherhaltigen Systemen aufgetragen.

Es ist jedoch unerwünscht, PVC-haltige Compounds einzusetzen. Bei der üblichen Verbrennung von Haushaltsabfall entstehen aus Halogenkunststoffen säurehaltige Gase, deren Entweichen in die Atmosphäre schädlich ist. Außerdem erfordern solche PVC-basierenden Dichtungselemente den Einsatz von Weichmachern, die aus gesundheitlichen Gründen ebenfalls bedenklich sein können.

Es besteht daher ein Bedarf für Gefäßverschlüsse, die ein Dichtungselement auf Polymerbasis aufweisen, welches aber nicht auf PVC basiert, und die sich für Gefäße mit relativ großen Öffnungen, oberhalb von 2 cm Innendurchmesser, eignen.

Es ist eine wesentliche Aufgabe der Erfindung, ein Verfahren zur Herstellung solcher Gefäßverschlüsse anzugeben, welches es ermöglicht, den Gefäßverschluss mit einem Dichtungselement auf Polymerbasis zu versehen, welches kein PVC enthält.

Es gehört weiterhin zu den Aufgaben der Erfindung, entsprechende Gefäßverschlüsse zu definieren.

Außerdem umfasst die Erfindung die Verwendung besonders geeigneter Polymercompounds für die Erzeugung solcher Gefäßverschlüsse.

Grundsätzlich werden erfindungsgemäß Gefäßverschlüsse für solche Gefäße bereitgestellt, deren durch den Gefäßverschluss zu verschließende Öffnung einen Innendurchmesser von mehr als 2 cm aufweist. Das entspricht einem Innendurchmesser, der größer ist als jener, den übliche Getränkeflaschen aufweisen, die mit Kronkorken, Schraubkappen und dergleichen in bekannter Weise verschlossen werden, wie beispielsweise in der EP-B1 0 503 124 beschrieben.

Besonders eignet sich die Erfindung für die Herstellung von relativ großen Gefäßverschlüssen, also für Gefäßöffnungen mit einem Innendurchmesser von mehr als 2,5 cm bis herauf zu solchen, bei denen der Innendurchmesser der zu verschließenden Öffnung größer als 4 cm ist.

Solche Gefäßverschlüsse eignen sich als Schraubdeckel für Flaschen, wie beispielsweise Saft- oder Milchflaschen, für Konservengläser, Marmeladengläser und dergleichen.

Insbesondere ermöglicht die Erfindung die Herstellung von Nockendrehverschlüssen mit Dichtungselementen aus PVC-freien Polymermaterialien.

Die Erfindung löst diese Aufgabe mittels der in Anspruch 1 definierten Merkmalskombination.

Obwohl für kleine Verschlussdurchmesser (Kronkorken, Schraubkappen) seit Jahrzehnten z.B. das als "SACMI-Verfahren" bekannte Prinzip eingesetzt wird, bei dem ein Polymercompound extrudiert und im Verschlussrohling durch Stempeln zur fertigen Dichtungseinlage geformt wird, hat die Industrie per dato für größere Verschlussdurchmesser (oberhalb 2 cm) keine Lösung gefunden, die es ermöglicht, auf PVC-basierende Plastisole und dergleichen zu verzichten.

Die Erfindung überwindet dieses Vorurteil durch den Vorschlag, Dichtungseinlagen für solche größere Verschlussdurchmesser durch Extrusion und nachfolgende Formgebung des Dichtungsmaterials zu erzeugen.

Für die erfindungsgemäßen Verfahren eignen sich grundsätzlich (auch) solche Polymercompounds, die bisher schon Einsatz für kleine Gefäßverschlüsse der Art finden, wie sie in EP 0 503 124 beschrieben sind.

Jedoch sind die Anforderungen an die Dichtungs-Materialien bei Gefäßverschlüssen für größere Innendurchmesser der Gefäßöffnung gegebenenfalls anspruchsvoller. Für solche Einsatzzwecke kommt es besonders darauf an, eine ausreichende Fließfähigkeit des Polymermaterials bei der Herstellung des Dichtungselementes zu verbinden mit ausreichenden Dichtungseigenschaften im verschlossenen Zustand; hierzu gehört auch die heute erforderliche Dichtigkeit gegenüber dem Eindringen bzw. dem Entweichen von Gasen, gegebenenfalls kombiniert mit einer Überdruckventilwirkung, die das Platzen des Gefäßes beim Erwärmen oder bei der Entwicklung von Überdruck im Gefäß aus anderen Gründen verhindert. Zudem wird aber gerade für die typischen Einsatzzwecke von Gefäßen mit größeren Öffnungsdurchmessern (beispielsweise Konserven) verlangt, dass das Dichtungselement auch unter Sterilisierungsbedingungen einsetzbar ist.

Die in EP 0 503 124 beschriebenen Gefäßverschlüsse, die typischerweise für die Abfüllung von Bier, Softdrinks, Saft und dergleichen in übliche enghalsige Getränkeflaschen gedacht sind, müssen zwar den dort genannten Behandlungen wie Pasteurisierung und Heißfüllung standhalten können, jedoch sind das thermisch weitaus weniger anspruchsvolle Verfahren als die Sterilisierung. Bei Pasteurisierung und Heißfüllung werden Temperaturen unterhalb 100 °C eingesetzt; typische Sterilisierungsbedingungen sind 121 °C oder sogar 132 °C. Die erfindungsgemäß zu verwendenden Polymermaterialien sind in der Art maßgeschneidert, dass sie einerseits während des Pasteurisations- und Heißfüllprozess und andererseits im Sterilisationsprozess ihre Dichtungswirkung im nötigen Umfang beibehalten.

Außerdem lassen sich nicht alle Compounds der in EP 0 503 124 beschriebenen Art ohne weiteres für größere Verschlüsse einsetzen. Obwohl in EP 0 503 124 angegeben ist, dass sich die dort beschriebenen Compounds auch für Schraubdeckel und dergleichen eignen, ist dies oft nur der Fall, wenn die Verarbeitungseigenschaften entsprechend abgewandelt werden - insbesondere durch den Zusatz von Strecköl, um die Fließfähigkeit zu verbessern. Das ist nicht immer erwünscht, z.B. im Hinblick auf die Gefahr der Migration von Compound-Bestandteilen in fetthaltige Nahrungsmittel - vergleiche unsere parallele europäische Patentanmeldung mit dem Titel "Migrationsverhindernde Polymercompounds", vom 09.11.2007.

Besonders problematisch ist in diesem Kontext die Herstellung von Nockendrehverschlüssen, die typischerweise als Verschlüsse für Schraubdeckelgläser verwendet werden. Wenn das Material der Dichtungseinlage, wie herkömmlich, auf PVC basiert und als weichmacherhaltiges, dünnflüssiges Plastisol in den Verschlussrohling eingetragen wird (bei Rotation des Rohlings unter der Abgabedüse), verteilt es sich ohne Probleme im Innenrandbereich und härtet dort nach Erhitzen für typischerweise 60 Sekunden bei 200 °C zu einer gleichmäßigen Dichtungsschicht gewünschter Dicke aus. So bildet sich die Dichtungseinlage unproblematisch auch im Bereich der inneren Hauptfläche des Verschlusses, der von den einwärts vorstehenden Nocken verdeckt ist.

Das ist jedoch nicht mehr der Fall, wenn ein Material zur Erzeugung der Dichtungseinlage verwendet wird, das diese Dünnflüssigkeit nicht aufweist.

PVC-freie Materialien, die keine Weichmacher aufweisen, müssen in thermisch ausreichend erweichter Form aufgetragen werden. Durch Rotation des Rohlings und Einspritzen des Materials, wie bei PVC-Plastisolen, lässt sich eine solche Dichtung nicht erzeugen. Dies erfordert vielmehr beispielsweise Extrusion und entsprechende Formgebung. Dabei stören die Nocken eines Nockendrehverschlusses, weil sie das Einbringen eines entsprechenden Werkzeuges unmöglich machen.

Grundsätzlich wird gemäß dem erfindungsgemäßen Herstellungsverfahren von einem Gefäßverschluss-Rohling aus Metall oder Kunststoff ausgegangen, der vorzugsweise zunächst auf seiner Innenseite mit einem geeigneten Primer vorbehandelt wird.

Insbesondere eignet sich hierfür ein TPE-Lack, etwa der von der Firma Rhenania entwickelte Primer-Lack, auf dem die erfindungsgemäß am meisten bevorzugten Compounds besonders gut haften.

Alternativ dazu kann man eine geeignete Primerbeschichtung durch Laminierung, Kaschierung oder eventuell auch durch Co-Extrusion aufbringen.

Auf den so vorbehandelten Rohling wird innenseitig das Polymermaterial, das die Dichtung bilden soll, in thermisch fließfähig gemachter Form aufgetragen. Insbesondere eignet sich hierfür eine Extrusion, bei welcher das Dichtungscompound im Temperaturbereich zwischen 100 °C und 260 °C vorgelegt wird.

Geeignete Auftragsmengen richten sich nach dem Durchmesser des Verschlusses. Typischerweise (aber natürlich nicht zwingend) liegt beispielsweise für einen Nockendrehverschluss mit einem Innendurchmesser von 66 mm und eine scheibenförmige Dichtungseinlage die Auftragsmenge im Bereich zwischen 1 und 2 g, insbesondere bei etwa 1,4 g.

Die Extrusion kann etwa in die Mitte der Rohling-Innenfläche erfolgen, wenn die Dichtungseinlage kreisscheibenförmig ausgebildet sein soll.

Nachfolgend wird das kreisschreibenförmige Dichtungselement aus dem extrudierten, noch fließfähigen Material durch entsprechende Stempelung (analog dem bekannten SACMI-Verfahren) geformt.

In abgewandelter Form kann das Dichtungselement außerhalb des Verschlusses oder Verschlussrohlings durch Verstempelung eines geeigneten Polymermaterials geformt und anschließend in den Verschluss oder Rohling eingebracht werden. Dieses Verfahren ist ebenfalls durch SACMI für kleine Verschlüsse als outshell-moulding bekannt.

Alternativ dazu kann das Dichtungselement ringförmig nur in dem Bereich ausgebildet sein, der später an der Mündung des zu verschließenden Gefäßes anliegt. Dieser Ring kann in den Verschluss eingestempelt, aber bei ausreichender Dimensionsstabilität auch lose eingelegt sein.

Für eine solche Auftragung eignet sich beispielsweise grundsätzlich das Verfahren, das in US 5,763,004 geschrieben worden ist. Hierbei wird ein ringförmiger Auftrag mittels einer entsprechenden ringförmigen Anordnung von Auftragungsdüsen bewirkt. Hieran kann sich ein geeigneter Formgebungsschritt durch Stempelung oder dergleichen anschließen.

Die Ausbildung des ringförmigen Dichtungselements kann alternativ dadurch erfolgen, dass zunächst ein Strang des entsprechenden Materials extrudiert wird. Dicke und Länge des Stranges werden so gewählt, dass der kreisförmig geschlossene Strang der Form des gewünschten Dichtungselements entspricht, wenn er durch entsprechende Stempelung verformt worden ist.

Der Strang wird kreisförmig geschlossen und mit einem geeigneten Werkzeug aufgenommen, um unter Erwärmung in den Verschluss-Rohling eingelegt zu werden. Nach seiner Einbringung wird der Strang durch Stempelung in die gewünschte Form des Dichtungselements gebracht.

Sowohl das Aufnahmewerkzeug als auch das Stempelungswerkzeug kann dabei so schmal geformt sein, dass die Nocken des Rohlings die Einbringung und Stempelung des Materials nicht behindern.

Das erfindungsgemäße Verfahren hat, wie ersichtlich, gegenüber dem bekannten Plastisol-Verfahren den weiteren Vorteil, dass die Dichtungseinlage durch die Formgebung (stempeln) bereits völlig fertig gestellt ist und nicht, wie beim Einspritzen von Plastisol, eine anschließende Aushärtung im Ofen erforderlich ist.

Die hier angegebenen Vorgehensweise eignet sich grundsätzlich für sämtliche Gefäßverschluss-Rohlinge, deren Innenseite unproblematisch zugänglich ist.

Wenn das entsprechend ausgeformte Dichtungselement kreisscheibenförmig ist, wird man vorzugsweise im Mittelbereich des Verschlusses, der keine Dichtungswirkung hat, weil er innerhalb der Gefäßmündung liegt, eine Dicke von etwa 0,1 - 0,2 mm für das Dichtungselement vorsehen.

Wenn der Gefäßverschluss völlig eben ist, wird das Dichtungselement daher auch in seinem Dichtungsbereich eine entsprechende Dicke haben.

Hat der Gefäßverschluss hingegen in dem Bereich, der der Mündung des zu verschließenden Gefäßes entspricht, eine Vertiefung ("Kanal"), so wie dies bei Verschlüssen mit PVC-basierenden Plastisol-Dichtungen regelmäßig der Fall ist, dann wird das Dichtungselement in diesem Bereich eventuell dicker sein. Wegen der größeren Elastizität eines dickeren Dichtungselementes kann das von Vorteil sein. In solchen Fällen ist das Dichtungselement in seinem dichtenden Bereich oft vorzugsweise etwa 1 mm dick.

Man kann im Bereich des Dichtungselementes, der dichtend mit der Gefäßmündung in Kontakt kommt, auch eine aufwändigere Formgebung vorsehen und insbesondere eine oder mehrere Dichtungslippen ausformen. Das kann durch entsprechende Formgebung beim Verstempeln des Extrudats geschehen. Im Bereich solcher Dichtungslippen kann das Dichtungselement dann eine entsprechend größere Dicke aufweisen und beispielsweise bis zu 3 mm dick sein.

Problematischer erscheint die Ausbildung entsprechender Dichtungselemente zunächst bei solchen Gefäßverschlüssen, deren Innenfläche nicht frei zugänglich ist. Ein typisches Beispiel sind Nockendrehverschlüsse, bei denen die Nocken, beim Blick auf die Innenseite des Verschlusses, den Dichtungsbereich teilweise überdecken und es unmöglich machen, einen Stempel oder dergleichen einzuführen, der im von den Nocken verdeckten Bereich das Dichtungselement ausformen kann.

Hier schafft eine besonders bevorzugt Ausführungsform der Erfindung Abhilfe, die nun unter Bezugnahme auf die beigefügten Zeichnungen näher beschrieben werden soll.

Darin zeigen:
- Figur 1: einen herkömmlichen Nockendrehverschluss,
- Figur 2: eine erste Ausführungsform der Erfindung und
- Figur 3: eine zweite Ausführungsform der Erfindung.

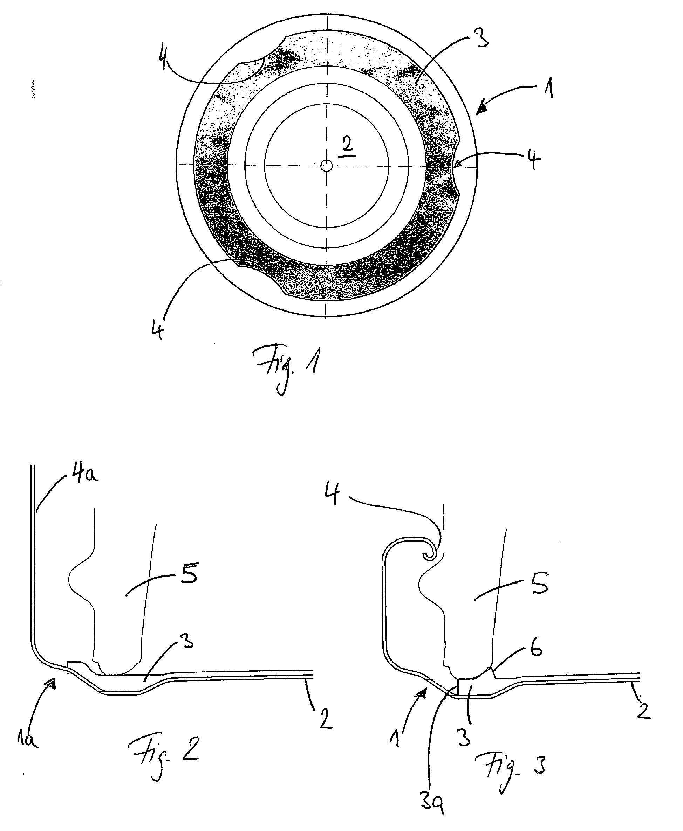

Figur 1 zeigt eine Aufsicht auf die Innenseite eines typischen herkömmlichen Nockendrehverschlusses (1).

Der Nockendrehverschluss (1) hat einen etwa planaren Innenbereich (2), der bei Verwendung des Verschlusses zum Innenraum des verschlossenen Gefäßes hin freiliegt und in Berührung mit dem Inhalt des Gefäßes kommen kann. Im hier gezeigten Ausführungsbeispiel erstreckt sich ein Dichtungselement (3) (dunkel gefärbt) nicht über die gesamte Innenfläche des Gefäßverschlusses (1), sondern ringförmig nur in dem äußeren Bereich des Verschlusses, der bei Verwendung des Verschlusses in Kontakt mit der Mündung des zu verschließenden Gefäßes steht. Bei einem typischen Nockendrehverschluss ist dies der "Kanalbereich", der auswärts über den Innenbereich (2) des Verschlusses vorsteht und daher auf der Innenseite eine Vertiefung bildet, in der das Dichtungselement (3) liegt. In diesen "Kanal" wird bei der herkömmlichen Herstellung das PVC-Plastisol eingespritzt, während der Verschlussrohling gedreht wird. Nachfolgend wird der Verschluss im Ofen nachbehandelt.

Der Nockendrehverschluss (1) hat insgesamt im Ausführungsbeispiel der Figur 1 drei Nocken (4), die beim Verschließen des Gefäßes in Eingriff mit dem entsprechenden Schraubgewinde treten und den Deckel so dichtend auf die Mündung des Gefäßes ziehen.

Wie Figur 1 unschwer erkennen lässt, verdecken die Nocken (4) das Dichtungselement (3), beim Blick auf die Innenseite des Verschlusses (1) teilweise. Entsprechend würden sie die Einbringung eines Stempels stören, mit dem das Dichtungselement (3) ausgebildet werden könnte - und zwar unabhängig davon, ob dieses Dichtungselement (3) wie gezeigt ringförmig oder stattdessen kreisscheibenförmig ist (in welchem Fall es auch den Innenbereich (2) überdecken würde).

Die Erfindung schlägt zwei Alternativen vor, um auch für einen Nockendrehverschluss ein Dichtungselement mittels Extrusion und nachfolgender Stempelung ausbilden zu können.

Bei der in Figur 2 gezeigten ersten Ausführungsform der Erfindung ist ein Längsschnitt durch einen Verschluss-Rohling (1a) zu sehen, der den Bereich vollständig zeigt, aus dem später die seitliche Wandung (4a) des Verschlusses einschließlich der Nocken geformt wird; darüber hinaus ist der "Kanalbereich" gezeigt und ein Teil der Innenfläche (2) etwa bis zur Mitte des Rohlings.

Bei dieser Ausführungsform wird das Dichtungselement ausgebildet, bevor der Wandbereich (4a) des Rohlings unter Ausbildung der Nocken verformt wird.

Wie Figur 2 zeigt, kann bei dieser Ausführungsform ein übliches Dichtungselement (3) durch entsprechende Extrusion und Stempelung ausgebildet werden, das sich über den Innenbereich (2) und in den Kanalbereich sowie über diesen hinaus erstreckt, so dass es einen ringförmigen Bereich ausbilden kann, der später mit der Mündung des angedeuteten Gefäßes (5) dichtend zusammenwirken kann.

Bei dieser Ausführungsform wird nach der vollständigen Ausbildung des Dichtungselementes (3) ein weiterer Bearbeitungsschritt vorgenommen, bei dem der Wandbereich (4a) des Rohlings abwärts und einwärts unter Ausbildung der in Figur 1 erkennbaren Struktur mit den Nocken (4) ausgeformt wird.

Eine Alternative hierzu ist die zweite Ausführungsform der Erfindung, die in Figur 3 beschrieben wird.

Figur 3 zeigt etwa die gleichen Elemente des Verschlusses wie Figur 2, nur handelt es sich hier um die Ausbildung eines Dichtungselementes, nach dem der Verschluss (1) schon inklusive der Nocken (4) ausgeformt worden ist.

Da die Nocken (4) die Einbringung eines Stempels verhindern, der eine Formgebung des Dichtungselementes (3) wie in Figur 2 ermöglichen würde, wird bei dieser Ausführungsform das Dichtungselement nur im Innenbereich (2) und bis in den Kanal hinein ausgebildet. Wie Figur 3 erkennen lässt, endet das Dichtungselement (3) noch im Kanalbereich mit einer Außenkante (3a).

Um dennoch eine gute Dichtung gegenüber der Mündung des Gefäßes (5) zu ermöglichen, ist hier durch entsprechende Formgebung beim Stempeln eine Lippe (6) am Dichtungselement (3) vorgesehen. Da dieser Bereich des Dichtungselementes auch trotz des Vorhandenseins der Nocken (4) beim Stempeln zugänglich ist, ist diese Formgebung unproblematisch; sie minimiert, im Vergleich mit der ersten schon beschriebenen Ausführungsform gemäß Figur 2, den Einfluss auf die Prozesskette zur Ausbildung der Nockenstruktur.

Für die Realisierung der Erfindung eignen sich neben den schon genannten bekannten Compounds auch solche auf der Basis von thermoplastischen Elastomeren, beispielsweise gemäß folgender Rezeptur:
Polyolefin vorzugsweise lineares Polyethylen niedriger Dichte (z.B. von SABIC): 40-50 kg; Styrol-Ethylen/Butylen-Styrol Block-Copolymer (z.B. Kraton G Serie): 15-25 kg
Polyolefin vorzugsweise: Polyethylen/Polypropylen Copolymer (z.B. ADFLEX Serie): 5-10 kg Medizinisches Weißöl (Viskosität 70 cSt): 20-30 kg
Erucasäureamid (Kemamide E): 0,25-0,5 kg
Ölsäureamid (ARMOSLIP CPA): 0,25-0,5 kg
Antioxidanz (IRGANOX 1010): 0,05-0,15 kg
Stabilisator (IRGAFOS 168): 0,05-0,15 kg
Pigment: 0,2-0,7 kg

Will man die Verwendung von Strecköl vermeiden, eignen sich besonders gut solche Compounds, wie in unserer parallelen internationalen Patentanmeldung mit dem Titel "Migrationsverhindernde Polymercompounds" beschrieben.

Für den jeweiligen konkreten Verwendungszweck kann das Compound hinsichtlich Shore-Härte, Elastizitätsmodul, rheologischen Eigenschaften und dergleichen durch im Stand der Technik bekannte Maßnahmen eingestellt werden.

Es ist möglich, die erfindungsgemäßen Dichtungseinlagen mit im Prinzip bekannten Maßnahmen auszustatten, die eine Barrierewirkung gegenüber Sauerstoff und Geschmackschädlingen wie Trichloranisol bewirken. Ebenso lassen sich die erfindungsgemäßen Dichtungselemente, wiederum analog bekannter Maßnahmen, mit den gewünschten Druckhaltungs- bzw. Überdruckventileigenschaften versehen.

Vorteilhaft werden die erfindungsgemäßen Gefäßverschlüsse so ausgestattet, dass sie eine Vakuumsretention der Art zeigen, wie sie gegenwärtig von bekannten Verschlüssen bereitgestellt wird.

Die erwünschte Vakuumsretention ist grundsätzlich das Ausmaß, in dem ein anfänglich vorgegebenes Vakuum im nicht befüllten Teil des verschlossenen Gefäßes auch nach der Pasteurisation bzw. Sterilisation und der Dauer der nachfolgenden Mindest-Lagerungsfähigkeit des Produktes noch besteht. Zum Beispiel kann verlangt sein, dass in einem verschlossenen Glasbehälter, der ein Lebensmittel enthält, ein anfänglicher Innendruck von weniger als 0.2 bar besteht, und bis zum Ende der Mindest-Lagerungsfähigkeit (Mindest-Haltbarkeitsdauer) der Innendruck nicht größer als 0.2 bar wird.

Typischerweise misst man die Vakuumsretention, in dem nach dem Pasteurisieren oder Sterilisieren bei einer Stichprobe von Gefäßen der Deckel durchstochen und so der Innenraum mit einem Manometer verbunden wird. Der Innendruck wird abgelesen und aufgezeichnet. Bei einer anderen Stichprobe kann jetzt z.B. der Verlauf der Mindest-Haltbarkeitsdauer durch Behandlung mit Dampf bei erhöhter Temperatur simuliert werden ("accelerated ageing"). Danach wird der resultierende Innendruck, wie bei der ersten Stichprobe, gemessen. An dem Vergleich der Ergebnisse lässt sich erkennen, ob das Produkt den Anforderungen entspricht. Wenn bei einer zu großen Anzahl von Gefäßen der Stichproben der zulässige Innendruck überschritten wird, ist dies nicht der Fall.

## Patentansprüche

1. Verfahren zur Herstellung eines Gefäßverschlusses für Gefäße mit einer durch den Gefäßverschluss zu verschließenden Öffnung mit einem Innendurchmesser von mehr als zwei cm, der ein Dichtungselement auf Polymerbasis umfasst, welches im Gefäßverschluss so angeordnet ist, dass es im Schließzustand dichtend an der Öffnung des Gefäßes anliegt, bei dem ein Polymermaterial durch Erwärmung ausreichend fließfähig gemacht und im Bereich des zu erzeugenden Dichtungselementes auf den Gefäßverschluss aufgetragen sowie gegebenenfalls mechanisch in die gewünschte Form gebracht wird, die es nach Erkalten beibehält.

2. Verfahren nach Anspruch 1, **dadurch gekennzeichnet, dass** der Gefäßverschluss einem Innendurchmesser der Gefäßöffnung von mehr als 2,5 cm, vorzugsweise mehr als 3 cm, mehr bevorzugt von mindestens 3,5 cm und besonders bevorzugt von mindestens 4 cm entspricht.

3. Verfahren nach Anspruch 1 oder 2, **dadurch gekennzeichnet, dass** der Gefäßverschluss als Schraubdeckel für eine Flasche, ein Glas oder dergleichen ausgebildet ist.

4. Verfahren nach einem der vorstehenden Ansprüche, **dadurch gekennzeichnet, dass** das Dichtungselement als Inneneinlage auf der Innenfläche des Gefäßverschlusses ausgebildet ist.

5. Verfahren nach Anspruch 4, **dadurch gekennzeichnet, dass** das Dichtungselement ringförmig oder kreisscheibenförmig ausgebildet ist.

6. Verfahren nach einem der vorstehenden Ansprüche, **dadurch gekennzeichnet, dass** das Dichtungselement aus einem Polymer oder Polymercompound besteht.

7. Verfahren nach einem der vorstehenden Ansprüche, **dadurch gekennzeichnet, dass** das Polymercompound so ausgebildet ist, dass das Dichtungselement unter Pasteurisationsbedingungen (bei bis zu 98°C) einsetzbar ist.

8. Verfahren nach einem der vorstehenden Ansprüche, **dadurch gekennzeichnet, dass** das Polymercompound so ausgebildet ist, dass das Dichtungselement unter Sterilisierungsbedingungen (bei 121 °C, vorzugsweise bei 132 °C) einsetzbar ist.

9. Verfahren nach einem der vorstehenden Ansprüche, **dadurch gekennzeichnet, dass** der Gefäßverschluss im Schließzustand eine Gas-Barrierewirkung und/oder eine Überdruckventilwirkung aufweist.

10. Verfahren nach einem der vorstehenden Ansprüche, **dadurch gekennzeichnet, dass** der Gefäßverschluss im Schließzustand eine Vakuumsretention zeigt.

11. Verfahren nach einem der vorstehenden Ansprüche, bei dem das Polymermaterial als Granulat bereitgestellt und mittels eines Extruders erwärmt wird.

12. Verfahren nach Anspruch 9, bei dem das fließfähige Polymermaterial aus einer Düse innenseitig auf den Gefäßverschluss aufgetragen wird.

13. Verfahren nach Anspruch 11 oder Anspruch 12, bei dem das aufgetragene Polymermaterial mittels eines Stempels oder dergleichen geformt wird.

14. Verfahren nach einem der Ansprüche 1 bis 11, **dadurch gekennzeichnet, dass** der Gefäßverschluss ein Nockendrehverschluss ist.

15. Verfahren nach Anspruch 12, bei dem zunächst in einem Verschlussrohling (1a) vor Ausformung des Wandbereichs mit den Nocken (4) das Dichtungselement (3) durch Stempelung ausgebildet wird und nachfolgend der Wandbereich mit den Nocken (4) geformt wird.

16. Verfahren nach Anspruch 12, bei dem das Dichtungselement (3) in einem fertig geformten Verschlussrohling (1) durch Stempelung ausgebildet wird.

17. Verfahren nach Anspruch 15, bei dem der Außendurchmesser des Stempels nicht größer ist als der frei zugängliche Bereich im Innendurchmesser des Rohlings (1).

18. Verfahren nach einem der Ansprüche 1 bis 15, wobei die Dichtungseinlage (3) eine Lippe (6) aufweist, die mit der Mündung des zu verschließenden Gefäßes (5) dichtend zusammenwirkt.
